# EUROPEAN PATENT APPLICATION

(11) **EP 2 163 305 A1**
(43) Date of publication of application: **17.03.2010**
(21) Application number: 08015717.5
(22) Date of filing: 05.09.2008
(51) Int. Cl.: B01L 3/00, G01N 1/00

(54) **Device and process for rapid isolation of a compound in a sample**

(71) Applicant: INSTITUT FÜR MIKROTECHNIK MAINZ GmbH, 55129 Mainz-Hechtsheim (DE); Universitat Rovira I Virgili, 43007 Taragona (ES); ICREA, Institució Catalana de Recerca I Estudis Avançats, Passeig Lluís Companys, 23 Barcelona CP 08010 (ES)
(72) Inventor: O'Sullivan, Ciara, Tarragona 43003 (ES); Hahn, Thomas, 03130 Spremberg (DE); Drese, Klaus-Stefan, 55130 Mainz (DE)
(74) Representative: Hrovat, Andrea Darinka

(57) **Abstract**

A microfluidic device for rapid isolation of a compound or component contained in a sample together with other components consists of a matrix material containing an inlet for introducing said sample (5), a first (1) and a second (2) electrolyte reservoir having first and second electrodes, said electrodes embracing a membrane (4) between them, which membrane has an upper and a lower side, a sample trapping reservoir located adjacent the upper side of said membrane and said sample inlet (5). Said device further comprises a third electrolyte reservoir (6) having a third electrode (10), embracing with said first electrode a separation means capable of separating said component from the other components of said sample, said separating means (10) having an inlet and an exit, whereby said inlet is connected to said sample trapping reservoir (4) by a duct comprising a valve and said exit is connected to a recovery reservoir (7) and via a duct to said third electrode (6).

With said device a component contained in a sample can be isolated from other components by introducing said sample into said device and applying a first electrical potential between the first and second electrode, whereby said membrane retains the component to be isolated and concentrates it over said membrane in a sample trapping reservoir. After turning off the first electrical potential a duct connecting the sample trapping reservoir with separation means is opened and an electric potential in a second electric circuit between the first electrode and the third electrode is applied. Thereby a flux transporting the components from the sample trapping reservoir through said separation means is generated and the isolated components after their passage through the separation means are recovered.

## Description

The invention relates to a microfluidic device, especially for preparative isolation of a material especially nucleic acids, a process for isolating said material and its use for determination of fetal-derived genetic disorders.

Nucleic acids can be found within the cell and in free circulating form in plasma and serum where it is not bound to any cell.

Chan et al., Clinical Chemistry 50:1, 88-92 (2004), Molecular diagnostics and genetics, "Size Distributions of Maternal and Fetal DNA in Maternal Plasma", describe that fetal DNA can be found in maternal plasma of pregnant women.

In order to determine said fetal DNA, PCR-technique had to be applied whereby a quantitative analysis of the fetal DNA has been achieved by nine real time PCR amplification techniques.

Li et al, Clinical Chemistry 50:6, 1002-1011 (2004) describe an analysis of fetal DNA in maternal plasma. Thereby, plasma DNA was examined by agarose gel electrophoresis. The fractions of fetal and maternal DNA were separated by size, fractionated and assayed by real-time PCR. The determination of paternally and maternally inherited fetal genetic traits could be examined by using high polymorphic chromosome-21-specific micro-satellite markers. In this analysis it has been found that cell-free fetal DNA had an approximate molecular size of < 0.3 kb, whereas maternally derived sequences were, on average, considerably larger than 0,5 kb. However, preparative isolation of the extremely diluted fetal DNA has not been achieved in microfluidics.

Preparative separation of biological material like nucleic acids or proteins is usually done by electrophoresis in relatively voluminous matrices or chambers. The desired proteins and nucleic acids are then obtained by cutting out the respective fraction of the electrophoresis matrix and the desired nucleic acid or protein from said material. However, such a process can neither be automated nor is apt for rapid isolation of amounts of components or compounds contained in sample.

The invention now has for its aim to provide a device especially a microfluidic device like a so-called lab-on-a-chip and a process to rapidly isolate a compound or component contained in a sample, especially in a biological sample. The invention has also for its aim to provide a device and a process for determining DNA, especially fetal DNA, from maternal blood, plasma or serum of a pregnant woman.

This aim can be achieved by a microfluidic device and a process as defined in the claims.

According to the invention, the compound contained in a mixture can be isolated by electrophoretic separation without gel extraction, thus an easy separation process is provided which can be automated. The device and process allow the isolation of small amounts of a material contained in a sample together with a mixture of other components.

The process and device of the present invention are especially apt to determine fetal nucleic acids in plasma or serum of a pregnant woman without the need of prior amplification because disturbing other nucleic acid fragments, especially maternal fragments, larger than 500 base pairs can be removed.

The invention also enables to purify a small amount of fragments having a small size and to deplete them from fragments having larger sizes.

The microfluidic device or microchip comprises a matrix or base material in which the functional elements are embedded. Especially it contains an inlet for introducing a sample containing the desired material, component or compound to be isolated. Said inlet is in fluid communication, i. e. in fluid connection with a membrane which is generally impermeable for the sample or at least the component to be isolated and retains it. Thus, the desired compound is concentrated on or above the membrane. In a preferred embodiment of the invention, the concentration process, i. e. the migration or fluence of the sample and/or the desired compound to said membrane is supported by a power source. A preferred power source is an electrical potential creating a flux driving the components towards the membrane. The electroosmotic flow counteracts to the mobility of the desired compound e. g. nucleic acids, which is necessary for successful electrokinetic trapping. Advantageously, the membrane is housed in a membrane chamber. Adjacent e. g. streamupward of the membrane a small excavation or cavity in the device matrix is provided, serving as sample trapping reservoir or area in which the concentrated sample is retained.

The device further comprises electrolyte reservoirs containing electrodes and being in fluid communication with the membrane. A preferred fluid communication is provided by an aqueous electrolyte which is advantageously buffered. The membrane has a first or upper side and a second or lower side which are communicating with a first and a second electrolyte reservoir containing first and second electrodes. In a preferred embodiment, sample receiving reservoir which takes up the sample inserted through the inlet is arranged between one of electrolyte reservoirs, preferably the first reservoir and the sample trapping reservoir.

When electrical potential is applied to the first and second electrodes, which serve as anode and cathode and an electric field or current is provided that generates a material flux from the first electrode via the first electrolyte through the membrane into the second electrolyte reservoir. Said flux moves or forces the compounds or components of the sample, especially the desired compound or compounds to be isolated, to the upper side of the membrane where they are retained and thus concentrated in the trapping reservoir above said membrane.

The sample trapping reservoir at the upper end of the membrane and is in fluid and electrolyte communication with a separation means via an openable or closable duct acting as a valve.

The separation means comprises an upper or a front end serving as inlet or entrance for the components to be separated and a lower end serving as exit for the separated components. The upper end is connected via a valve to the sample trapping area aligned above the upper side of the membrane. In its closed state said valve interrupts the fluid communication between said sample trapping reservoir and said separation means. In its open state the valve allows the components of the sample to migrate or flow to and through said separation means. At the lower end or exit, i. e. downstream of said separation means, a sample recovery reservoir is provided that communicates with a recovery outlet, from which fractions of the sample can be taken after its passage through the separation means.

Downstream of the exit end and said recovery reservoir a third electrolyte reservoir containing a third electrode is provided which electrolytically is connected with the first electrode via the first electrolyte, sample trapping area, valve, separation means and a recovery reservoir or area.

The elements or means of said device are housed within a device matrix. The matrix material can be any material that is inert to the substances applied and that provides enough rigidity like e. g. a glass, metal, alloy or a synthetic material like a polycarbonate, polymethacrylate (PMMA) or any other synthetic resin, cyclo olefin copolymer (COC), poly(ethylene) (PE).

In the present description the terms "upstream" and "downstream" always relate to the migration of the sample, especially its components to be separated and isolated.

The elements, especially channels, reservoir and other means are advantageously provided as cavities embedded within the matrix material of the device. In a preferred embodiment, the cavities are provided such that they are open to the matrix surface, so that they can be covered or closed by a foil or plate. The foil or plate itself is preferably transparent and can be of any material which is inert to the substances applied like e. g. polyester foils and PMMA foils.

In a preferred embodiment, the membrane resides in a membrane chamber. The membrane comprises channels, preferably nanopores or nanopores having a diameter of at least 2 nm, usually at least 10 nm, preferably 20 nm, especially of at least 30 nm, whereby 40 nm and especially 50 nm are most preferred. The preferred maximal size of the nanopores is preferably 200 nm or 180 nm, respectively. A maximal pore size from 150 nm, especially 120 nm is most preferred. For most applications, a maximal pore size of 100 nm has been shown to be sufficient for concentration.

The membrane element can be provided as integral part within the matrix. However, preferred embodiment the membrane is a fine, porous material especially a synthetic material, like polyesters, polyurethanes, polyamides, polyvinylchlorides, etc. The pore size is preferably homogeneous.

In a preferred embodiment, the membrane material is made of a polyester, preferably of polyethylene terephthalate. Preferably, the material of the membrane can be capable to perform electrokinetic trapping. Advantageously, the membrane material, especially its surface or its pores carrying an electrical charge e.g. by ionic moieties or can be loaded with an electrical charge. Such membranes capable for concentrating a compound by electrokinetic trapping are known per se and e. g. described by Dai et al. in J. Amer. Chem. Soc. 125, 13026 - 13027.

The valve can be any element or mechanism capable to open or to close a fluid and electrolytic connection between the sample trapping area and the separation means. In a preferred embodiment the valve is provided by a small channel or duct containing gas plug, preferably air. In this state the valve is closed. Said gas plug is connected to a gas outlet through which, when opened, the gas automatically will be removed due to back pressure from reservoir 1 by replacing the area with electrolyte. In this state the valve is open and electric circuit between reservoir 1 and reservoir 3 is provided.

The electolyte provides a fluid and electrical or electrolytical connection between the first electrode and third electrode via separation means and sample trapping reservoir.

The invention also relates to a process for rapid isolation of a component contained in a sample. The sample usually contains a plurality of further components. According to the process, the sample is introduced in the microfluidic device, especially as described before, which device usually contains at least one electrolyte and first and second electrodes. Advantageously, the sample is a small sample having a maximum volume of 200 µl, preferably of 150 µl, where maximum of 100 µl are especially preferred. It is obvious to the man skilled in the art that also smaller volumes can be used in the process of the present invention. The introduction of the sample usually is made by injecting it with a small needle or a similar means like a pipette. Advantageously, the introduced sample is received or stored in a sample reservoir that is located between a second electrode membrane, and a sample trapping reservoir located downstream and a first electrode located upstream. Between the first and the second electrode at least one advantageously buffered electrolyte is present, thus providing a fluid and electric or electrolytic connection between the first electrode and second electrode via sample reservoir, trapping reservoir, membrane. In a preferred embodiment a first electrolyte reservoir is provided upstream of the sample receiving reservoir with which the first electrode is in contact. In an other preferred embodiment, a second electrolyte reservoir is provided downstream of the membrane, which second electrolyte reservoir is in contact with the second electrode. Advantageously, the first and the second electrolyte comprise different electrolytic ions or comprising them in different concentrations. For example one electrolyte system can consist of 2-Amino-2-(hydroxymethyl)-1,3-propanedial (Tris) and glycine for the terminating electrolyte of lower electrophoretic mobility than sample ions, and Tris and hydrochloric acid, which serves as leading electrolyte with a higher mobility. Preferably both buffers should have a pH in the basic regime, e.g. pH 8.5, where sample ions are negatively charged. The negative character of a sample ion in the electrolyte allows electrokinetic trapping, which retains molecules of the same charge as the membrane by electrostatic interactions.

A first potential is applied between the first and the second electrode generating a counter flow of electrolyte from reservoir 2 to reservoir 1. This flow counteracts to the mobility of nucleic acids and is a requirement for successful trapping of sample ion within the membrane reservoir.
The electroosmotic flow produces a volumetric stream towards the second electrode, which stream directs the sample components from the sample reservoir to the membrane. On the membrane, the respective sample components are retained and thus are preconcentrated on its upstream side. The area above the membrane which collects the concentrated sample is the sample trapping reservoir. Preferably, this preconcentration is achieved by electrokinetic trapping.

This first electrical potential usually is applied until the respective sample components migrate from the sample reservoir into the membrane or sample trapping reservoir. Advantageously, the potential is applied at least for a minimum of 180 sec, usually at least 210 sec, wherein at least 240 sec are preferred. The maximum application time of the first potential depends on the stability of the membrane and the components to be isolated and usually is about 15 min, preferably maximal 10 min, wherein maximal 8 min is especially preferred.

As soon as all the desired components migrate to the trapping reservoir, the first electrical potential is disconnected and a second potential between the first and the third electrode is applied. Said third electrode is located downstream of the sample trapping reservoir, the separation means, preferably said third electrode that is connected to a third electrolyte reservoir being located further downstream of the separation means and downstream of a sample recovering reservoir aligned to the exit of the separation means. Once the shuttable duct that connects the trapping reservoir with the separation means (wherein the duct acts as a valve) is opened, a third electric potential is applied thus generating a flux moving the components from the trapping reservoir through the valve duct into and passing through the matrix of the separation means in which the components contained in said samples are separated.

The sample and its components pass through said separation means with different velocities due to their size and/or electrical or ionical charge. Thus, the different components of the sample are separated from each other and exit the separation means after different passage times. At the end or exit of said separation means, sample recovery reservoir is provided, from which fractions of the separated samples can be withdrawn, thereby isolating the desired components. Preferably said reservoir is filled with matrix free electrolyte. The thus collected components can be used for further purposes. The time for application of the second potential depends on the migration of the desired component through the separation means. It has been shown that for fetal nucleic acid fragments, the time applied is at least 8, preferably at least 9 min, wherein max. 12, especially 10 min have been shown to be sufficient.

In a preferred embodiment, after the application of the first electrical potential is stopped and before the second potential is applied, the valve duct which in its closed state advantageously is filled with air or another gas plug, is filled with an intermediate electrolyte system containing ions having a lower electrophoretic mobility than the component or components to be isolated. In contrast thereto, the separation means contains an electrolyte system comprising ions having a higher electrophoretic mobility than the component or components to be separated. Thereafter and before the second electrical potential is applied, an intermediate potential is applied between the first and third electrode generating a flux directing said components from the sample trapping reservoir to and into the matrix of the separation means. Due to the different mobilities of the different buffer/electrolyte systems, the components to be separated are further concentrated by isotachophoresis and enter the separation means matrix highly concentrated in a sharp band. When the components more or less completely have entered the separation means, the application of the intermediate potential is stopped and the intermediate buffer is exchanged by an electrolyte/buffer containing ions having a higher electrophoretic mobility than the component to be isolated. This can be done e. g. by rinsing said duct via an inlet and an outlet at the duct's end reaching to the device's surface. Subsequent to said provision of the homogenous electrolyte system, the second potential is applied as described before.

The time for applying the intermediate potential during isotachophoresis is usually at least for 30 sec, especially for at least 40 sec depending on the length of the valve duct. Typical maximal times during which the intermediate voltage is applied usually are 120 sec, preferably maximal 100 sec, wherein a maximum of 80 sec is usually sufficient. When 250 V are applied, 50 sec are sufficient for the sample ions to enter the separation duct.

In a preferred embodiment, the sample recovering reservoir is connected to a facility for further processing the separated and isolated component. A preferred facility is e. g. a PCR reaction facility, into which an isolated nucleic acid can be amplified or quantified. Said multiplied nucleic acid can then be used for further analysis, e. g. for determining genetic defects or aberrations.

Also real-time PCR for quantification is feasible on-chip.
The process and device according to the invention has been shown to be extremely apt to isolate fetal nucleic acids contained in the blood, plasma or serum of a pregnant woman. Thus an easy and rapid method is provided to determine possible genetic defects in an unborn at an early stage without causing the danger being inherent with the prior art methods, e. g. by amniotic puncture.

It is obvious to one skilled in the art that the valve function can also be achieved by any other openable barrier means, e. g. barrier system which can be punched, like a foil or a membrane, or by a shutter system which can be open or closed mechanically magnetically or electrically.

The separation means can be any means which is capable of separating and isolating the desired components of the sample. Typical separating means are miniaturized chromatographic columns known by one skilled in the art. As a preferred example capillary zone electrophoresis is mentioned. In a preferred embodiment of the invention the separation means comprises a recess that is filled with a chromatographic material. Such a recess is usually longitudinal having a length to width ratio of at least 100:1, preferably at least 500:1.

Typical chromatographic material is a sieving matrix, as e.g. linear acrylamide, acrylamide that is co-polymerized with N,N-methylene bisacrylamide, agarose, poly(ethyleneglycol), cellulosic polymer solutions, poly(vinylpyrolidone), or any other e.g. hydrophobic/hydrophilic interactions, van der Waals interactions, dipole interactions or Coulomb interactions e. g. an ionic exchange material, ion exchange material, size excluding material like e. g. Sephadex and especially any material apt for electrophoresis. Typical materials are polyacrylamide and Agar-Agar.

As electrodes any electrically conducting material can be used as long as it is compatible with the substances applied.

The sample inlet and the sample recovery reservoir are elements that can be provided in any suitable form. In its simplest form each element can be provided by a small recess or channel which is in fluid communication with the other elements via an electrolyte system which is contained within the devices cavity or reservoirs. The sample inlet and the recovery outlet are preferably covered with a fine foil which can be punctured by a pipette or a needle of a syringe.

As electrolyte any aqueous system can be used. Preferred electrolytes are buffered. In a special embodiment they are buffered at a basic pH where sample ions are negatively charged when trapped at negatively charged membranes or a lower pH when positively charged sample ions are trapped in front of positively charged membranes. For nucleic acids a pH of 8.5 provides successful electrokinetic trapping. Therefore, amphophilic sample ions (e.g. proteins) can be trapped on positively or negatively charged substrates depending on the pH of the electrolyte.

For trapping of nucleic acids a previously mentioned 5 mM Tris- cation and glycine anion pH 8.5 terminating electrolyte is sufficient.

The separation means contains a matrix prepared with a leading electrolyte (Tris/HCl pH 8.5).

The samples and the compounds or components contained therein can be any chemical component or a component mixture. Preferably the sample and its components are biological samples from which proteins and nucleic acids are preferred. In another preferred embodiment, the samples and the compounds or components to be isolated are electrically charged components. Typically charged components are compounds or molecules which carry an ionic moiety like a carboxylic acid moiety, a phosphate moiety or a sulphate moiety. Another typical moiety is an ammonium moiety. The electrical charge carried on said compound can be a positive or a negative charge.

The invention is further explained by the following figures and examples.

Fig. 1 describes the elements of a device according to the invention.

Fig. 2 shows a result obtained with the process of the present invention from the serum of pregnant women.

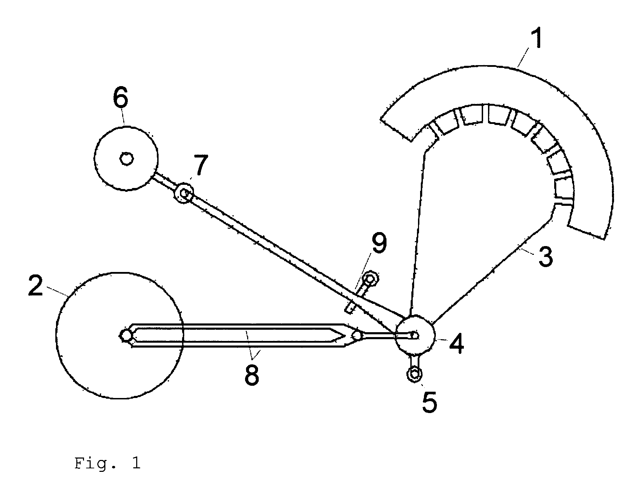

As shown in Fig. 1, a poly (methyl methacrylate) (PMMA) microchip is provided with the following structures. The structures are obtained by milling. The microchip contains buffer reservoirs 1, 2, 6 and a chamber having a volume of 80 µl for the injection of the sample 3. Through the inlet, said chamber can be filled with the water-based nucleic acid containing sample 5. As separation means, the microchip comprises a polyester membrane where concentration takes place by electrokinetic trapping. The two channels in the anodic part provide an electroosmotic flow, as soon as a potential is applied. This electroosmotic flow provides a flux rate through the membrane. Thereby, the flux rate acts against the electrophoretic mobility of the nucleic acids. Via an opening 7 which also acts as recovery or withdrawal outlet, the separation channel 10, the duct or channel 10 is filled up to a T-junction valve in a 60:1 ratio with 9% polyacrylamide and N, N-Methylenbisacrylamide. Polyacrylamide serves as a matrix to separate the nucleic acids according to their size.

First, the nucleic acids from the chamber are concentrated on the membrane by applying a first potential of 1000 V between the anodic reservoir 2 and the grounded reservoir on the cathode side 1. After 5 minutes, preconcentration is completed and after switching off the first potential a second potential of 250 volts is applied between the reservoir 6 and the end of the separation channel 10.

Before applying said second electric potential or circuit the fluid of the membrane reservoir is fluidly connected with the chromatographic material in the separation means by opening a T-junction valve 9 and filling it with an electrolyte. The electrolyte connects reservoir 1 which contains ions of lower electrophoretic mobility than the component with the electrolyte of reservoir 3 which contains ions of a higher electrophoretic mobility than the component to be stacked in front of the matrix by an isotachophoretic process. An exchange of the electrolyte of reservoir 1, 2 and sample chamber with the same electrolyte as in reservoir 3 starts the separation process.

The other two reservoirs are grounded. Due to the second electrical potential, the nucleic acids migrate from the membrane towards the matrix in the separation channel 10 and will be concentrated again by isotachophoresis when reaching the matrix of channel 10. For this the T-junction valve is opened and the backpressure from reservoir 1 drives the fluid from the trapping reservoir onto the matrix to connect terminating and leading electrolyte.

The separation matrix in channel 10 contains anions having an electrophoretic mobility that is higher than the one of nucleic acids. In said inhomogeneous buffer/electrolyte system, the nucleic acids are arranged according to their electrophoretic mobilities as a sharp band. Said transport of nucleic acids controlled by isotachophoresis is advantageous in order to introduce all nucleic acids as one single sharp band into the separation channels matrix 10. This isotachophoresis is carried out for 50 seconds. During this time, the nucleic acids move into the matrix. When this is achieved, the special fourth buffer/electrolyte system is exchanged by rinsing the microchip and a homogeneous buffer system with the anions having higher electrophoretic mobility than nucleic acids is provided. Said electrolyte usually corresponds to the buffer which had been used previously in reservoir 6. Applying again a potential between reservoir 6 and grounded reservoirs 1 or 2, the nucleic acids migrate through the matrix where they are separated according to their size similar to a sieve effect. Small nucleic acid fragments which migrate through the matrix faster than larger nucleic acid fragments can be recovered first at the end of the channel 10.

Migration time can easily be determined for different components, e. g. for larger nucleic acid dependent on their length as well as for proteins dependent on their size or charge.

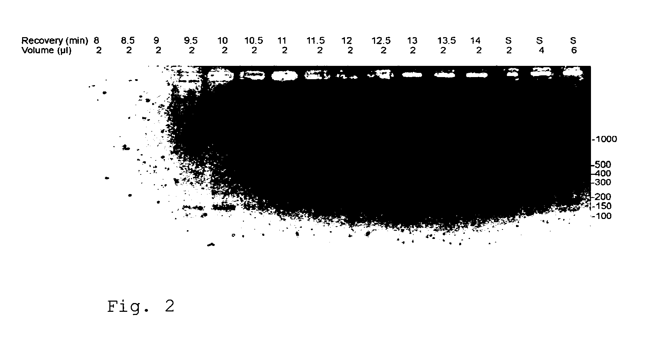

Fig. 2 shows a preparative separation in a 9 % polyacrylamide matrix. The recovered fractions were applied on a agarose gel at different times. This allows quantification of individual fragments in comparison with the untreated sample represented as sample (S). The fragments smaller than 300 bp are separated significantly from the fragments greater than 500 bp. The fragments of from 100 - 200 bp appear after 9.5 - 10 minutes, with fragments from 500 bp being detected from 11 minutes experimental time. Comparing the intensity of the bands with different volumes of the sample allows determination of the concentration factor of each fragment for each group. In Fig. 2, in the fractions of 9.5 minutes and 10 minutes, respectively, a concentration factor of 4 was achieved for fragments of from 100 - 200 bp.

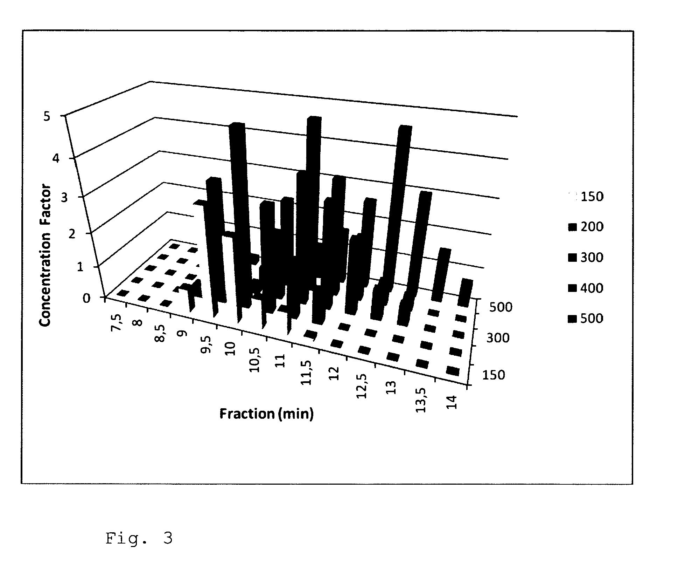

Fig. 3 shows the reproducibility of the experiment. The diagram shows the average of 8 experiments, and the recovery values for each fraction from 7.5 - 14 minutes are plotted. The experiments confirm a 3 to 4 times concentration of the nucleic acids of from 150 - 200 bp in the fractions of 9.5 min and 10 min, respectively. These groups do not contain fragments larger than 300 bp, confirming an effective and reproducible separation or isolation.

## Claims

1. Microfluidic device for rapid isolation of a compound or component contained in a sample together with other components, comprising in a matrix material
an inlet for introducing said sample (5),
a first (1) and a second (2) electrolyte reservoir having first and second electrodes,
said electrodes embracing a membrane (4) between them, which membrane has an upper and a lower side,
- a sample trapping reservoir located adjacent the upper side of said membrane and said sample inlet (5),
**characterized in that**
said device further comprises
a third electrolyte reservoir (6) having a third electrode (10), embracing with said first electrode a separation means capable of separating said component from the other components of said sample,
said separating means (10) having an inlet and an exit, whereby
said inlet is connected to said sample trapping reservoir (4) by a duct comprising a valve and
said exit is connected to a recovery reservoir (7) and via a duct to said third electrode (6).

2. Device according to claim 1, wherein said separation means comprises a duct containing a chromatographic material.

3. Device according to claim 2, wherein said chromatographic material is a material that separates compounds by mechanical hindrance or chemical interactions.

4. Device according to any one of the preceding claims, wherein said membrane contains nanopores having pore size between 2 - 200 nm.

5. Device according to any one of the preceding claims, **characterized in that** it comprises a sample reservoir (3) for receiving said sample, which reservoir (3) is in fluid connection with sample inlet (5), first electrolyte reservoir (1), and second electrolyte reservoir (2)and with membrane (4).

6. Device according to any one of the preceding claims further comprising at the lower end of said separation means a facility for further processing said material.

7. Process for rapid isolation of a component from a sample containing said component together with other components, by introducing said sample in a microfluidic device containing at least one electrolyte and comprising first and second electrodes and a membrane being electrically located between them,
generating a flux transporting said components contained in said sample to the membrane by applying a first electrical potential between the first and second electrode, whereby said membrane retains the component to be isolated and concentrates said component over said membrane in a sample trapping reservoir,
**characterised by**
turning off of the first electrical potential and opening a duct which connects the sample trapping reservoir with separation means capable of separating the components of the sample,
applying an electric potential in a second electric circuit between the first electrode and the third electrode generating a flux transporting the components from the sample trapping reservoir through said separation means, thereby separating the components from each other and recovering the isolated components after their passage through the separation means.

8. Process according to claim 8, **characterized in that** before applying the second electric potential the fluid of the membrane reservoir is fluidly connected with the chromatographic material in the separation means.

9. Process according to claims 7 and 8, wherein said separation means is a duct containing a chromatographic material.

10. Process according to claim 9 or 10, wherein said sample is transported from the sample trapping reservoir (4) to the separation means by isotachophoresis.

11. Process according to claims 7 to 10, wherein said compound is an ionically charged biological material.

12. Process according to claim 7 - 10, wherein said compound is cell free fetal nucleic acid obtained from blood, plasma or serum of a pregnant woman.

13. Process according to claims 7 - 11, wherein said component is a nucleic acid and is subjected to PCR and/or further analysis after its separation.
